(19) Europäisches Patentamt / European Patent Office / Office européen des brevets

(11) **EP 1 601 561 B1**

(12) **EUROPÄISCHE PATENTSCHRIFT**

(45) Veröffentlichungstag und Bekanntmachung des Hinweises auf die Patenterteilung:
**13.07.2011   Patentblatt 2011/28**

(21) Anmeldenummer: **04712568.7**

(22) Anmeldetag: **19.02.2004**

(51) Int Cl.:
*B60T 8/1755* (2006.01)      *B60T 8/24* (2006.01)

(86) Internationale Anmeldenummer:
**PCT/EP2004/050164**

(87) Internationale Veröffentlichungsnummer:
**WO 2004/074059 (02.09.2004 Gazette 2004/36)**

(54) **VERFAHREN UND SYSTEM ZUR REGELUNG DER FAHRSTABILITÄT EINES FAHRZEUGS UND VERWENDUNG DES SYSTEMS**

METHOD AND SYSTEM FOR CONTROLLING THE DRIVING STABILITY OF A VEHICLE AND USE OF SAID SYSTEM

PROCEDE ET SYSTEME POUR REGLER LA STABILITE A LA CONDUITE D'UN VEHICULE ET UTILISATION DUDIT SYSTEME

(84) Benannte Vertragsstaaten:
**DE FR**

(30) Priorität: **20.02.2003   DE 10307405**

(43) Veröffentlichungstag der Anmeldung:
**07.12.2005   Patentblatt 2005/49**

(73) Patentinhaber: **Continental Teves AG & Co. oHG**
**60488 Frankfurt (DE)**

(72) Erfinder:
• **KÜMMEL, Martin**
  **34286 Spangenberg (DE)**
• **STEINMEIER, Frank**
  **65719 Hofheim (DE)**
• **KUMSCHIER, Rafael**
  **65760 Eschborn (DE)**

(56) Entgegenhaltungen:
EP-A- 1 388 474      DE-A- 10 046 036
DE-A- 10 119 907      DE-A- 10 135 020

## Beschreibung

Die Erfindung betrifft ein Verfahren zur Regelung der Fahrstabilität eines Fahrzeugs, bei dem eine Fahrsituation des Fahrzeugs charakterisierende Größen in einem Prozess erfasst werden.

Die Erfindung betrifft ferner ein zur Durchführung des Verfahrens geeignetes System und seine Verwendung.

Bekannte Fahrdynamik-Regelsysteme detektieren das Fahrzeugverhalten mit geeigneter Sensorik und vergleichen das Fahrzeugverhalten, das von dem Fahrer u.a. über die Lenkung beeinflusst wird, mit einem Referenzverhalten für das Fahrzeug. Abweichungen zwischen dem Fahrzeugverhalten und dem Referenzverhalten werden durch Bremsen- bzw. Motoreingriffe ausgeregelt.

Als Ausführungen solcher Systeme sind vor allem zu nennen die Bremsschlupfregelegung (ABS), die ein Blockieren einzelner Räder während eines Bremsvorgangs verhindern soll, die Antischlupfregelung (ASR), die ein Durchdrehen der Antriebsräder unterbinden soll, die elektronische Bremskraftverstärkung (EBV) zur Regelung des Verhältnisses zwischen der Bremskraft an der Vorder- und Hinterachse, die Kippregelung(ARB) zur Verhinderung des Kippens des Fahrzeugs um seine Längsachse und die Giermomentregelung (ESP) zum Stabiliesieren des Fahrzeugs bei einer Gierbewegung zu nennen.

Diese Regelsysteme reagieren jedoch erst dann, wenn eine Abweichung des Fahrzeugverhaltens von dem Referenzverhalten bereits sensiert ist. Somit sind sie lediglich in der Lage, das Fahrzeugverhalten in einer kritischen Fahrsituation zu verbessern, sie können kritische Fahrsituationen aber nicht verhindern.

Insbesondere wenn der Fahrer eine kritische Fahrsituation provoziert, indem er sicherheitskritische Lenkwinkelgeschwindigkeiten bzw. Lenkwinkel einstellt, muss von diesen Regelsystemen zunächst die Reaktion des Fahrzeugs erfasst werden, bevor sie in die Fahrdynamik eingreifen können. Damit kann der Fahrer ein Fahrzeug in sicherheitsbedenkliche Situationen zwingen, die zum Schleudern oder zu einem Überschlag führen können.

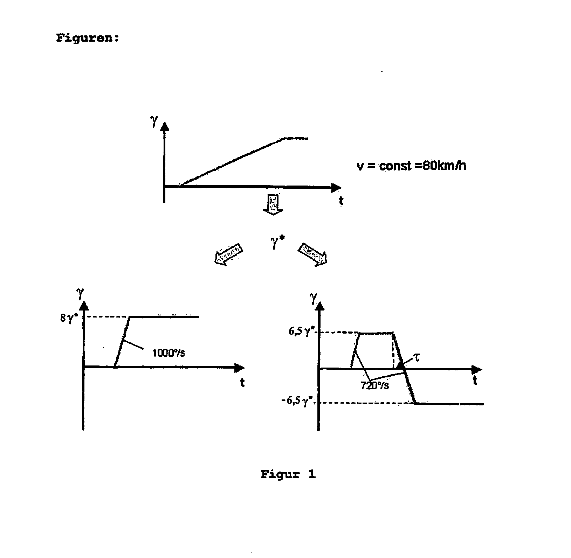

Von der US- amerkanischen National Highway Traffic Safety Administration (NHTSA) ist diesbezüglich geplant, einen Test bzgl. Rollover Resistance durchzuführen, um das Verhalten eines Fahrzeugs in den beschriebenen Situationen zu prüfen. Die hohen Anforderungen, denen die Fahrzeuge in diesem Test ausgesetzt werden, sind in der Figur 1 dargestellt.

Es ist wünschenswert, dass Fahrdynamik-Regelsysteme mögliche kritische Fahrsituationen zuverlässig frühzeitig erkennen und verhindern können. Einige Systeme zur frühen Erkennung sicherheitsgefährdender Fahrsituationen sind bereits bekannt.

So geht aus der DE 10 119 907 A1 sowie aus der internationalen Patentanmeldung WO 02/36401 A1 ein Verfahren zur Regelung der Fahrstabilität hervor, bei dem bei einem stabilen Fahrverhalten ermittelt wird, ob aufgrund eines hochdynamischen Anlenkens eine Tendenz zu einem nachfolgenden instabilen Fahrverhalten vorliegt, wobei in diesem Fall ein Brems-Voreingriff bereits bei einem stabilen Fahrverhalten erfolgt. Anhand des Vergleichs der sensierten Lenkradwinkelgeschwindigkeit, der Gierrate und/oder der Querbeschleunigung mit vorgegebenen Schwellenwerten wird dabei beurteilt, ob das Fahrzeug eine Tendenz zu einem instabilen Fahrverhalten zeigt.

Dieses bekannte Verfahren unterscheidet sich dadurch von den Verfahren, welche den auf eine kritische Situation reagierenden Systemen zugrunde liegen, dass es bereits dann aktiv wird, wenn das Fahrzeug noch ein stabiles Verhalten zeigt. Es beruht jedoch wie die bekannten reaktiven Verfahren auf dem Vergleich von Ist-Daten mit Schwellenwerten, die ein instabiles Fahrverhalten erwarten lassen. Diese Werte müssen aus Versuchen an einem Referenzmodell des Fahrzeugs ermittelt werden, wobei sich dabei das Problem ergibt, dass individuelle Fahrsituationen, die beispielsweise durch die momentan vorliegende Beladung des Fahrzeugs und Beschaffenheit des Untergrundes bestimmt werden, nicht oder nur durch einen erheblichen Aufwand umfassend berücksichtigt werden können.

Ausgehend von dem dargestellten Stand der Technik liegt der vorliegenden Erfindung die Aufgabe zugrunde, ein gattungsgemäßes Verfahren und ein gattungsgemäßes System so weiterzuentwickeln, dass sicherheitsgefährdende Fahrsituationen zuverlässiger frühzeitig erkannt und wirkungsvoller verhindert werden.

Erfindungsgemäß wird diese Aufgabe durch ein Verfahren nach Patentanspruch 1 gelöst.

Die Aufgabe wird ferner durch ein System nach dem Patentanspruch 19 gelöst.

Die Erfindung sieht dabei vor, ein Verfahren zur Regelung der Fahrstabilität eines Fahrzeugs durchzuführen, bei dem das Fahrverhalten eines Fahrzeugs charakterisierende Größen innerhalb eines Prozesses erfasst werden, aus den erfassten Größen eine Fahreraktion ermittelt wird, eine aufgrund der Fahreraktion zukünftig zu erwartende Fahrsituation bestimmt wird und diese Fahrsituation daraufhin untersucht wird, ob es sich um eine kritische Fahrsituation handelt. Falls die zu erwartende Fahrsituation als kritisch eingestuft wird, werden Bremsen- und/oder Motoreingriffe bereits bei einem stabilen Fahrverhalten vorgenommen, welche die Fahrsituation so verändern, dass die aufgrund der Fahreraktion zu erwartende Fahrsituation nicht eintritt.

Das Verfahren beinhaltet somit, dass eine Überwachung des Fahrverhaltens und eine Bewertung der zukünftig zu erwartenden Fahrsituation vorgenommen werden, um kritische Fahrsituationen frühzeitig zu erkennen. Die Erfindung geht damit über die Prüfung der momentanen Fahrsituation hinaus, die bei bekannten Verfahren als Anhaltspunkt für zukünftiges Fahrverhalten dient. Die Vorhersage des zu erwartenden Fahrverhaltens gründet sich bei der vorliegenden Erfindung auf die erkannte Fahreraktion und ist somit zuverlässiger und situationsangepasster als eine Berechnung des zukünftigen Fahrzeugverhaltens aus den Istdaten der Fahrdynamik und damit verknüpften Grenzwerten, die an einem Fahrzeugmodell mit einem geübten Fahrer ermittelt werden.

Eine typische Fahreraktion, die zu einer sicherheitskritischen Fahrsituation führen kann, ist beispielsweise eine Lenkbewegung mit einem sehr großen Lenkradwinkelgradienten.

Das erfindungsgemäße Verfahren erlaubt es, aus den beim Einleiten dieser Lenkbewegung gemessenen fahrdynamikrelevanten Größen, die zu erwartenden Werte dieser Größen zu ermitteln und mit vorgegebenen, situationsabhängigen Grenzwerten zu vergleichen. Beim Überschreiten dieser Grenzwerte können entsprechende Bremsen- und/oder Motoreingriffe vorgenommen werden, um das Auftreten einer kritischen Fahrsituation zu vermeiden.

Ein weiterer Vorteil des erfindungsgemäßen Verfahrens ist, dass es in die Durchführung eines elektronischen Fahrstabilitätsprogramms integriert werden kann.

Daher ist es besonders vorteilhaft, dass es sich bei dem Prozess, innerhalb dessen die relevanten Größen gemessen werden, um ein Fahrstabilitätsprogramm für Fahrzeuge handelt.

In einer bevorzugten Durchführungsform des Verfahrens werden mindestens die Prozessgrößen Lenkradwinkel und/oder Lenkwinkel und Fahrzeuggeschwindigkeit gemessen, wobei mit der Fahrzeuggeschwindigkeit die Geschwindigkeit des Fahrzeugsschwerpunkts gemeint ist.

Eine frühzeitige kritische Fahrzeugsituation kann beispielsweise dadurch ermittelt werden, dass die Fahreraktion mittels einer aus den Prozessgrößen Lenkwinkel und Fahrzeuggeschwindigkeit unter Einbeziehung von Fahrzeugkonstanten erzeugten momentanen Querbeschleunigung $a_{y1}$ ermittelt wird.

Dafür ist es vorteilhaft, dass die Querbeschleunigung $a_{y1}$ ermittelt wird, die das Fahrzeug erreichen würde, wenn der Fahrer mit dem aktuell eingestellten Lenkwinkel weiterfahren würde.

Eine frühzeitige kritische Fahrzeugsituation kann in einer besonders bevorzugten Durchführungsform des Verfahrens dadurch ermittelt werden, dass die Fahreraktion mittels einer aus den Prozessgrößen Lenkwinkelgeschwindigkeit und Fahrzeuggeschwindigkeit erzeugten, zukünftig zu erwartenden Querbeschleunigung $a_{y2}$ ermittelt wird.

Erfindungsgemäß wird die zukünftig zu erwartende Querbeschleunigung $a_{y2}$ ermittelt, die das Fahrzeug erreichen würde, wenn der Fahrer mit nahezu gleicher Lenkgeschwindigkeit weiter ein- oder auslenkt.

Bei der Ermittlung der kritischen Fahrzeugsituation ist es ferner vorteilhaft, dass die ermittelten Größen der Querbeschleunigungen $a_{y1}$, $a_{y2}$ mit jeweils einem oder mindestens einem Grenzwert verglichen werden.

Eine kritische Fahrzeugsituation wird vorteilhaft dadurch unterbunden, dass die Bremseingriffe an mindestens einem Rad erfolgen.

Eine kritische Fahrsituation wird weiterhin vorteilhaft dadurch unterbunden, dass durch die Bremseingriffe die Fahrzeuggeschwindigkeit verringert wird.

Ein weiteres Beispiel für eine fahrdynamikrelevante Größe, die mit den erfindungsgemäßen Verfahren überwacht werden kann, ist die Gierrate des Fahrzeugs.

Eine kritische Fahrsituation kann dadurch erkannt werden, dass mit Hilfe eines Gierratensensors und/oder Gierwinkelsensors gemessene Istdrehdaten mit Solldrehdaten verglichen werden. Vorteilhaft ist es dabei, dass die Solldrehdaten aus den Prozessgrößen in einem Fahrzeugmodell ermittelt werden.

Es ist bevorzugt, dass aufgrund der gemessenen Istgierratendaten eine zukünftig zu erwartende Gierrate ermittelt wird. Die zu erwartende Gierrate kann mit Solldrehdaten verglichen werden, um eine anhand einer Fahreraktion sicherheitsgefährdende Fahrsituation frühzeitig zu erkennen.

Falls einer der Vergleiche eine kritische Fahrsituation erwarten lässt, kann in Abhängigkeit von Ist- und Solldrehdaten durch die Bremseingriffe ein Zusatzdrehmoment um die Hochachse des Fahrzeugs - also ein Giermoment - erzwungen werden, das die Fahreraktion kompensiert.

Dabei ist vorgesehen, dass Signale für eine ein ermitteltes Zusatzdrehmoment oder eine ermittelte Geschwindigkeitsreduktion des Fahrzeugs bewirkende Druckanforderung für einen Bremsdruckaufbau und/oder einen Bremsdruckabbau in den Radbremsen in einer Fahrdynamikregelung generiert und die entsprechenden Befehle an die Aktuatoren ausgegeben werden.

Die Ermittlung der Stärke des Bremseingriffs erfolgt vorteilhaft dadurch, dass die Signale für den Bremsdruckaufbau und/oder den Bremsdruckabbau in Abhängigkeit von den Größen der Querbeschleunigungen $a_{y1}$, $a_{y2}$ und/oder der Fahrzeuggeschwindigkeit und/oder der tatsächlichen Querbeschleunigung und/oder dem Lenkradwinkel gebildet werden.

Es ist vorteilhaft vorgesehen, dass der Brems- und/oder Motormomenteingriff beendet wird, wenn die erwartete kritische Fahrsituation ausbleibt oder keine tatsächliche kritische Fahrsituation mehr ermittelt wird.

Zum Regelungsaustritt ist als Bedingung vorgesehen, dass die kritische Fahrsituation nicht mehr ermittelt wird, wenn die Größen der Querbeschleunigungen $a_{y1}$ und $a_{y2}$ unterhalb vorgegebener Schwellenwerte liegen.

Die Erfindung stellt ferner ein System zur Verfügung, dass zur Durchführung des erfindungsgemäßen Verfahrens geeignet ist. Als System ist hier insbesondere eine Vorrichtung zu verstehen, in der die Komponenten zusammenwirken.

Das System zur Regelung der Fahrstabilität eines Fahrzeugs umfasst das Fahrverhalten des Fahrzeugs charakterisierende und in einen Prozess eingehende Größen messende Sensoren, eine Einheit zum Auswerten der gemessenen Werte der Größen und ein Mittel zum Erzeugen von Steuersignalen zum Steuern eines Bremsen- und/oder Motoreingriffs.

Das System beinhaltet ferner ein Mittel zum Ermitteln einer Fahreraktion aus den Werten der innerhalb eines Prozesses gemessenen Größen, ein Mittel zum Bestimmen von aufgrund der ermittelten Fahreraktion zukünftig zu erwartenden Werten von eine Fahrdynamik des Fahrzeugs charakterisierenden und aus den gemessenen Größen und Fahrzeugkonstanten ableitbaren Größen, ein Vergleichsmittel zum Vergleichen der zu erwartenden Werte dieser Größen mit Schwellwerten für diese Größen und zum Überprüfen, ob eine kritische Fahrsituation zu erwarten ist und beinhaltet darüber hinaus ein Mittel zur Steuerung von Bremsen- und/oder Motoreingriffen in Abhängigkeit des Ergebnisses des Vergleichs.

Ergibt der Vergleich, dass eine kritische Fahrsituation zu erwarten ist, kann diese durch geeignete Bremsen- und/oder Motoreingriffe verhindert werden.

In einer bevorzugten Ausführungsform umfasst das System mindestens einen Sensor zum Erfassen der Fahrzeuggeschwindigkeit und einen Sensor zum Erfassen des Lenkwinkels und/oder des Lenkradwinkels.

Es ist ebenfalls sehr vorteilhaft, dass das System überdies einen Sensor zum Erfassen der Gierrate des Fahrzeugs beinhaltet.

Ein weiterer Vorteil des Systems besteht darin, dass es sich in eine Fahrstabilitätsregelung, wie ABS, TCS, ESP und dergleichen integriert werden kann.

Das System eignet sich ferner sehr vorteilhaft für eine Verwendung in einer Einrichtung zum Verhindern des Kippens eines Fahrzeugs.

Weitere vorteilhafte Durchführungsformen des erfindungsgemäßen Verfahrens und weitere vorteilhafte Ausgestaltungen des erfindungsgemäßen Systems ergeben sich aus den Unteransprüche und aus der folgenden Darstellung bevorzugter Ausführungsbeispiele der Erfindung anhand der Zeichnungen.

Von den Zeichnungen zeigt

Fig. 1    eine Darstellung der Testbedingungen des NHTSA Tests zur Bestimmung der Rollover Resistance Rate

Fig. 2    eine schematische Darstellung eines Fahrzeugs mit Bremsregelsystem

Jedes Fahrzeug besitzt auch auf hohem Reibwert eine maximale Querbeschleunigung, die von der Fahrbahn-Reifen-Materialpaarung, vom Fahrwerk und letztendlich auch vom Fahrzeugschwerpunkt abhängt. Versuche zeigten, dass ungeübte Fahrer in Gefahrensituationen meist zu spät und oft auch viel zu stark lenken und damit die physikalischen Grenzen des Fahrzeugs überschreiten.

Die vorliegende Erfindung schafft ein neues Verfahren und eine neues System zur Fahrdynamik-Regelung. Sie ermöglicht es, sicherheitskritische Fahreraktionen rechtzeitig zu erkennen und die zu erwartenden, gefährlichen Fahrzeugreaktionen durch geeignete Bremseingriffe und/oder Motoreingriffe präventiv zu verhindern. Es handelt sich demnach um ein Bremsenregelsystem zur frühzeitigen Erkennung unplausibler und sicherheitskritischer Fahreraktionen, welche die physikalischen Möglichkeiten des Fahrzeugs überschreiten.

Das System wird bevorzugt bei einem Fahrdynamikregelsystem, wie ABS, TCS, ESP etc. bzw. bei einer Einrichtung zum Verhindern des Umkippens von Fahrzeugen eingesetzt. Fahrzeuge, die mit diesen Systemen ausgerüstet sind, verfügen auch bereits über die erforderliche Sensorik und weisen die benötigten Aktuatoren auf.

Das erfindungsgemäße Verfahren und das erfindungsgemäße System dienen einer Vermeidung von Fahrzeuginstabilitäten, die durch heftige Lenk- und Gegenlenkreaktionen, wie sie z. B. bei einem Ausweichmanöver, bei Spurwechseln und dergleichen auftreten können. Insbesondere bei Fahrzeugen mit hohem Schwerpunkt besteht bei diesen Manövern eine erhebliche Gefahr des Umkippens.

Die angesprochenen Fahrsituationen werden beispielsweise in den von der US-amerikanischen NHTSA geplanten Tests zur Bestimmung der Rollover Resistance von Fahrzeugen provoziert. Die vorgesehenen Manöver sind in Figur 1 veranschaulicht.

Zunächst wird der Lenkradeinschlag und damit der Lenkradwinkel $\gamma$ bei einer konstanten Fahrzeuggeschwindigkeit von v = 80km/h langsam erhöht, bis die Zentrifugalbeschleunigung am Fahrzeugschwerpunkt 0,3 g beträgt. Bei dem entsprechenden Lenkradeinschlag wird der Lenkradwinkel $\gamma^*$ ermittelt, der diesem Einschlag entspricht.

Der eigentliche Test beinhaltet ein "J-Turn"- und ein "Fishhook"- Manöver.

Beim "J-Turn"- Manöver wird der Lenkradwinkel $\gamma$ mit einem Lenkwinkelgradienten $\dot{\gamma}$ von 1000˚/s auf einen Wert von 8 $\gamma$ gebracht.

Das "fishhook"- Manöver ist dadurch charakterisiert, dass der Lenkradwinkel $\gamma$ zunächst bei einem Lenkradwinkelgradienten $\dot{\gamma}$ von 720˚/s auf einen Winkel $\gamma$ von 6,5 $\gamma^*$ gebracht und dann konstant gehalten wird, bis zu der Zeit $\tau$ der maximale Wankwinkel - also die maximale Auslenkung des Fahrzeugs bzgl. einer Drehung um seine Längsachse - erreicht ist. Dann wird dass Lenkrad zurückgedreht bis ein Lenkradwinkel $\gamma$ von -6,5 $\gamma^*$ erreicht ist. Die Veränderung

des Lenkradwinkels $\gamma$ beim Zurücklenken soll dabei ebenfalls einem Lenkradwinkelgradienten $\dot{\gamma}$ von 720˚/s entsprechen.

Positive bzw. negative Lenkradwinkel $\gamma$ entsprechen dabei Rechts- bzw. Linkskurven oder umgekehrt. Es ist nicht entscheidend, welche Richtung welchem Vorzeichen entspricht.

Bei den beschriebenen Manövern treten somit sehr hohe Lenkwinkel $\delta$ und sehr hohe Lenkwinkelgradienten $\dot{\delta}$ auf. Es kann insbesondere bei einem durch das "fishhook"- Manöver simulierten Ausweichmanöver mit Gegenlenken und bei einem hohen Reibwert zu einem Umkippen bzw. Überschlagen des Fahrzeugs kommen.

Allgemein wurden in der Vorbereitung der vorliegenden Erfindung zwei Fahreraktionen ermittelt, die sowohl einzeln, als auch gemeinsam vorkommend, als kritisch zu werten sind.

Sie führen zu einer Schleudergefahr und können auf hohen Reibwerten sogar zu einem Umkippen bzw. Überschlagen des Fahrzeugs führen.

Es handelt sich dabei um

a) Lenken mit sehr hohen Gradienten, und

b) "Überlenken", d.h. ein Einstellen eines Lenkwinkels $\delta$ vom Fahrer, der die physikalischen Möglichkeiten des Autos deutlich überschreitet.

Auf einer Berücksichtigung dieser kritischen Fahreraktionen baut ebenfalls der vorangehend beschriebene NHTSA- Test auf. Insbesondere bei Fahrzeugen, die, bezogen auf ihre Spurweite, einen sehr hohen Schwerpunkt aufweisen, können diese Fahreraktionen zu einem unkontrollierten Eindrehen und im schlimmsten Fall zu einem Überschlag führen. Unter die besonders gefährdeten Fahrzeuggattungen fallen etwa LTVs (Light Trucks and Vans) und SUVs (Sports Utility Vehicles).

Mit der vorliegenden Erfindung werden ein Verfahren und ein System geschaffen, die solche Fahreraktionen zuverlässig frühzeitig erkennen und sicherheitskritische Situationen durch geeignete Bremsen- und/oder Motoreingriffe vermeiden.

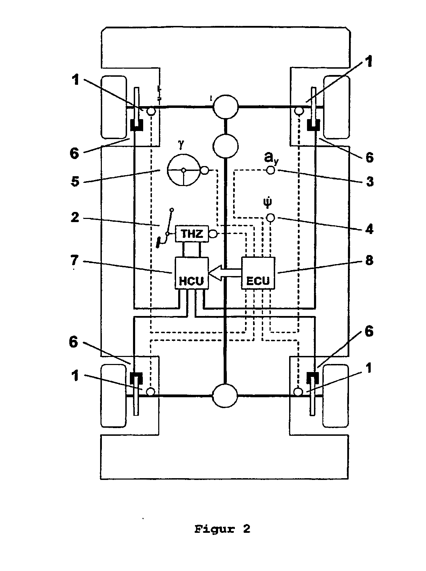

Die Erfindung nutzt dafür das aus Sensoren und Aktuatoren bestehende System, das typischerweise in Fahrzeugen mit einem ESP- System vorhanden ist. Die ESP- Sensorik und das Bremsregelsystem eines derartigen Fahrzeugs sind schematisch in der Figur 2 dargestellt.

Das ESP- System umfasst einen Radrehzahlsensor 1 für jedes der vier Räder des Fahrzeugs, einen Tandemhauptzylinder (THZ)- Drucksensor 2, einen Querbeschleunigungssensor 3 zum Erfassen der Querbeschleunigung $a_y$, einen Gierratensensor 4 zum Erfassen der Gierrate $\dot{\Psi}$ und einen Lenkradwinkelsensor 5 zum Erfassen des Lenkradwinkels $\gamma$.

Die Messsignale der Sensoren werden an das Fahrezeugrechnersystem (ECU) 8 übertragen, wie durch die gestrichelten Linien in Figur 2 angedeutet ist.

In diesem Ausführungsbeispiel wird davon ausgegangen, dass das Fahrzeug über eine hydraulische Bremse verfügt. Die Verwendung einer elektro-hydraulischen oder elektromechanischen Bremse ist jedoch gleichfalls möglich.

Bei einer hydraulischen Bremsanlage wird der Bremsdruck von dem Fahrer durch das Bremspedal über einen Hauptbremszylinder (THZ) aufgebaut, und die Bremsen 6 an den einzelnen Rädern sind über Einlassventile mit dem Hauptzylinder (THZ) verbunden. Auslassventile, über welche die Radbremsen 6 mit einem drucklosen Behälter oder einem Niederdruckspeicher in Verbindung stehen, regeln eine Verringerung des Bremsdrucks. Die Einlass- und Auslassventile werden zur Druckregelung elektromagnetisch betätigt.

Zudem ist eine Hilfsdruckquelle vorgesehen, mit deren Hilfe unabhängig von der Stellung des Bremspedals ein Bremsdruck in den Radbremsen 6 aufgebaut werden kann.

Der Bremsdruck in dem Hauptzylinder (THZ) wird durch eine Betätigung des Bremspedals eingestellt, so dass der THZ-Drucksensor durch einen Pedalweg- oder Pedalkraftsensor ersetzt werden kann, um einen Fahrerbremswunsch zu sensieren. Den Messsignalen kann dann jeweils ein THZ- Druck zugeordnet werden.

In ähnlicher Weise kann auch der Lenkradwinkelsensor 5 durch einen Lenkwinkelsensor ersetzt werden, da eine vorgegebene Beziehung zwischen dem Lenkwinkel $\delta$ der Vorderräder und dem Lenkradwinkel $\gamma$ besteht.

Der Hauptzylinder (THZ) der hydraulischen Bremsanlage ist über Hydraulikleitungen mit einer Hydraulikeinheit (HCU) 7 zum Ansteuern der Bremsen 6 verbunden. Die Hydraulikeinheit (HCU) 7 empfängt Steuersignale von dem Fahrzeugrechnersystem (ECU) 8 und ermöglicht eine individuelle Ansteuerung der einzelnen Radbremsen 6, wie sie durch ein ESP vorgenommen wird.

Die Interaktion der einzelnen Komponenten des Bremssystems geschieht über Hydraulikleitungen, die in Figur 2 durch durchgezogenen Linien schematisch dargestellt sind.

Der erste Ansatz der Erfindung bezieht sich auf die Erkennung der physikalischen Querbeschleunigungsgrenze und der vom Fahrer dem Fahrzeug abverlangten Seitenkraft.

Dabei wird ermittelt, ob ein Lenkwunsch des Fahrer einen Lenkwinkel $\delta$ bzw. einen Lenkwinkelgradienten $\dot{\delta}$ beinhaltet, der so hoch ist, dass die aufgrund des Lenkwunsches zu erwartende Querbeschleunigung $a_y$ einen vorgegebenen Schwellenwert überschreitet.

Die aufgrund des Lenkwunsches zu erwartende Querbeschleunigung $a_y$ wird dabei in der nachfolgend beschriebenen Weise ermittelt:

Zwischen der Fahrzeuggeschwindigkeit v, der Querbeschleunigung $a_y$ und der Gierrate $\dot{\Psi}$ besteht einerseits die Beziehung

$$\dot{\Psi} \cdot v = a_y \qquad \text{(I)}$$

wobei die Größen auf den Schwerpunkt des Fahrzeugs bezogen sind.

Andererseits gilt für die Gierrate $\dot{\Psi}$ auch

$$\dot{\Psi} = \frac{\delta \cdot v}{l + v^2 \cdot EG} \qquad \text{(II)}$$

wobei dieser Ausdruck eine Abhängigkeit der Gierrate $\dot{\Psi}$ von dem Lenkwinkel $\delta$ und dem sogenannten Eigenlenkgradienten EG beinhaltet. Der Eigenlenkgradient EG des Fahrzeugs gibt dabei das Eigenlenkverhalten eines Fahrzeugs an, also die von einem Fahrereinfluss unabhängigen Lenkeigenschaften unter Querbeschleunigung $a_y$. Je nachdem ob der Eigenlenkgradient EG größer als Null, gleich Null oder kleiner als Null ist, verhält sich das Fahrzeug übersteuernd, neutral oder untersteuernd. Dies ergibt sich daraus, dass die Größe EGay gerade die Differenz der Schräglaufwinkel an der Vorder- und Hinterachse angibt. Mit 1 ist der Radstand des Fahrzeugs bezeichnet.

Die Ausdrücke (I) und (II) für die Gierrate $\dot{\Psi}$ können gleichgesetzt und nach $a_y$ aufgelöst werden, um einen Ausdruck für die Querbeschleunigung $a_y$ in Abhängigkeit der Fahrzeuggeschwindigkeit v, dem erfassten Lenkwinkel $\delta$ sowie den fahrzeugabhängigen Parametern Radstand 1 und Eigenlenkgradient EG zu erhalten:

$$a_{y1} = \frac{\delta \cdot v^2}{l + v^2 \cdot EG} \qquad \text{(III)}$$

Dieser Ausdruck gibt nun die momentane Querbeschleunigung $a_{y1}$ des Fahrzeugs insbesondere in Abhängigkeit von dem momentanen (gemessenen) Lenkwinkel $\delta$ an. Die Größe $a_{y1}$ entspricht damit der Querbeschleunigung, die das Fahrzeug bei konstanter Kreisfahrt mit dem aktuell eingestellten Lenkwinkel $\delta$ theoretisch fahren würde.

Die momentane Querbeschleunigung $a_{y1}$ kann auch mit Hilfe des Querbeschleunigungssensors 1 gemessen werden.

Überschreitet der Wert von $a_{y1}$ einen bestimmten, situationsabhängigen Grenzwert (z.B. 9-11 m/s$^2$), so kann davon ausgegangen werden, daß der Lenkeinschlag des Fahrers für die aktuelle Geschwindigkeit v zu groß ist. D.h. es liegt eine kritische Fahrsituation vor, die zu instabilem Fahrverhalten und auf Hochreibwert sogar zum Umkippen des Fahrzeugs führen kann.

Der Ausdruck (III) erlaubt in dieser Form jedoch noch nicht die erfindungsgemäß vorgesehene Vorhersage der zu erwartenden und vom Fahrer anhand seines Lenkverhaltens gewünschten bzw. provozierten Querbeschleunigung $a_y$, wenn der Lenkwinkel $\delta$ durch den Fahrer weiterhin verändert wird.

Doch wird gerade ein solches Verhalten etwa bei unvorhergesehenen Ausweichmanövern oft beobachtet.

Der Unterschied des Lenkwinkels $\delta$ nach der Zeit t zu dem momentanen Lenkwinkel ergibt sich aber unter der Voraussetzung eines konstanten Lenkwinkelgradienten $\dot{\delta}$ zu $\dot{\delta}$ t. Im Rahmen der Erfindung wird eine Voraussage der Querbeschleunigung für eine kurze Zeit t nach der Messung der Querbeschleunigung $a_y$ oder der sie bestimmenden Größen angestrebt.

Die Zeitspanne innerhalb derer die Voraussage in die Zukunft gerichtet sein soll, wird mit LcPaytime bezeichnet und beträgt bis zu 1s. Ein typischer Wert, der das Lenkverhalten des Fahrers sowie das Ansprechverhalten des Elektronik- und des Bremssystems und des Fahrzeugs berücksichtigt, beträgt 300 ms.

Die anhand der Fahreraktion zu erwartende Querbeschleunigung $a_{y2}$ ergibt sich damit durch den Ausdruck

$$a_{y2} = \frac{(\delta + \dot{\delta} \cdot LcPaytime) \cdot v^2}{l + v^2 \cdot EG} \qquad \text{(IV)}$$

Die Querbeschleunigung $a_{y2}$ enthält die theoretische Querbeschleunigung $a_y$, die das Fahrzeug zukünftig (in der Zeit LcPaytime) haben würde, wenn der Fahrer mit gleichmäßiger Lenkgeschwindigkeit $\dot{\delta}$ weiter ein- oder auslenkt.

Der Lenkwinkelgradient $\dot{\delta}$ kann dabei aus zwei kurz hintereinander gemessenen Werten des Lenkraddwinkels $\gamma$ oder des Lenkwinkels $\delta$ ermittelt werden.

Überschreitet das Signal $a_{y2}$ einen bestimmten, situationsabhängigen Grenzwert (z. B. 6-15 m/s$^2$), so kann davon ausgegangen werden, dass der Lenkeinschlag des Fahrers innerhalb einer kurzen Zeitspanne für die aktuelle Geschwindigkeit zu groß sein wird. Das heißt, es ist davon auszugehen, dass in Kürze eine kritische Fahrsituation vorliegen wird, die zu instabilen Fahrverhalten und auf Hochreibwert sogar zum Umkippen des Fahrzeugs führen kann.

Mit Hilfe der Signale $a_{y1}$ und $a_{y2}$ lässt sich eine Fahreraktion, die zu kritischem Fahrverhalten führen kann, somit zuverlässig und - insbesondere anhand des Signals $a_{y2}$ - frühzeitig erkennen. Um ein Auftreten kritischer Fahrsituationen abzuwehren, wird das Bremsregelsystem aktiviert, das mit Hilfe eines Bremseingriffs die Fahrzeuggeschwindigkeit reduzieren und/oder durch einen asymmetrischen Bremseingriff das Fahrzeug in ein Untersteuern zwingen kann. Die Druckaufbauten können dabei über das Blockierdruckniveau hinausgehen, um gezielt Seitenführungskraft an den Eingriffsrädern abzubauen.

Die sitatuationsabhängigen Grenzwerte werden an einem Referenzfahrzeug ermittelt und in dem Fahrzeugrechnersystem (ECU) abgespeichert.

Das Fahrzeugrechnersystem (ECU) beinhaltet ein Mittel zum Bestimmen der Querbeschleunigungen $a_{y1}$ und $a_{y2}$ aus den von der Sensorik des Gesamtsystems übermittelten Daten.

Die momentane Querbeschleunigung $a_{y1}$ kann dabei gemäß dem Asudruck (III) durch das Mittel zum Bestimmen der Querbeschleunigung berechnet werden oder sich direkt aus dem Messsignal des Querbeschleunigungssensors 3 ergeben.

Zur Berechnung der momentanen Querbeschleunigung erhält das Mittel die Messsignale des Lenkradwinkelsensors 5 und die Signale der Raddrehzahlsensoren 1, aus denen die Fahrzeuggeschwindigkeit v ermittelt werden kann.

Die Fahrzeugkonstanten, wie Radstand 1 und Eigenlenkgradient EG sind in dem Fahrzeugrechnersystem (ECU) 8 gespeichert.

Die redundante Messung ermöglicht auch eine Überprüfung der Funktion der Sensoren durch das Fahrzeugrechnersystem (ECU) 8. So erlaubt der Vergleich des berechneten Wertes von $a_{y1}$ mit dem Messsignal eine Überprüfung des Messsignals des Lenkradwinkelsensors 5.

Das System verfügt ferner über ein Vergleichsmittel, das die aus den anhand der von Sensoren übermittelten Messdaten ermittelten Werte für die Querbeschleunigungen $a_{y1}$ und $a_{y2}$ mit den eingespeicherte Grenzwerten vergleicht. In Abhängigkeit des Ergebnisses des Vergleichs generiert das Fahrzeugrechnersystem (ECU) Stellsignale, die an die Hydraulikeinheit (HCU) 7 übermittelt werden und einen Bremseingriff initiieren. Die Übermittlung der Stellsignale ist in Figur 2 durch einen Pfeil schematisch dargestellt.

Die Grenzwerte sind dabei in einer bevorzugten Ausführungsform der Erfindung situationsabhängig. Sie können - falls eine entsprechende Sensorik vorhanden ist - Witterung, Fahrbahnbelag und eventuell weitere Parameter berücksichtigen.

Die Stärke des Bremseingriffs kann dabei von den Signalen $a_{y1}$ und $a_{y2}$ und von der Fahrgeschwindigkeit v, der tatsächlichen Querbeschleunigung $a_{y1}$, des Lenkwinkels $\delta$ abhängig sein.

Alle Größen bzw. die entsprechenden Messsignale werden von dem Fahrzeugrechnersystem (ECU) 8 verarbeitet, das daraufhin entsprechende Steuersignale erzeugt und an die Hydraulikeinheit (HCU) 7 übermittelt. Diese steuert dann die Radbremsen 6 entsprechend den Steuersignalen an.

Der Bremseneingriff erfolgt dabei vorzugsweise entweder an den Vorderrädern oder an dem kurvenäußeren Vorderrad. Insbesondere falls ein starker Bremseingriff notwendig wird, werden bevorzugt beide Vorderräder abgebremst, da ein Abbremsen des kurvenäußeren Rades allein ein zu großes Giermoment erzeugen könnte, so dass das Fahrzeug ins Schleudern geraten könnte.

Bei weniger starken Bremseingriffen wird jedoch bevorzugt das kurvenäußere Rad abgebremst, um das Fahrzeug in ein Untersteuern zu zwingen. Dies kann ferner dadurch erreicht werden, dass ein Rad so stark abgebremst wird, dass es kurzzeitig blockiert. Dies führt zu Abbau von Seitenführungskraft und kann ebenfalls ein Untersteuern des Fahrzeugs bewirken. Die Regelung des Bremsensystems erfolgt damit analog zur Regelung durch ein ESP.

In einer vorteilhaften Ausführungsform verfügt das erfindungsgemäße System zudem über ein Mittel für einen Motoreingriff. Dies erlaubt es, das Fahrzeug durch eine Absenkung des Motormomentes abzubremsen, um sicherheitskritische Fahrsitutionen zu vermeiden. Der Motoreingriff kann dabei zusätzlich zu dem Bremseingriff vorgenommen werden.

Ferner ist es besonders vorteilhaft, wenn die aus den Messsignalen des Gierratensensors 4 ermittelte Gierrate $\dot{\Psi}$ bei der Steuerung der Brems- und/oder Motoreingriffe berücksichtigt wird.

Dadurch können die Brems- und/oder Motoreingriffe so gesteuert werden, dass ein Zusatzgiermoment erzwungen wird, das einer sicherheitskritischen Gierbewegung entgegenwirkt.

Es kann dabei auch vorgesehen sein, neben der momentanen Gierrate $\dot{\Psi}$ auch die Gierrate $\dot{\Psi}_1$ zu ermitteln, die auftreten würde, wenn der Fahrer mit gleichmäßiger Lenkgeschwindigkeit $\dot{\delta}$ weiter ein- oder auslenken würde.

Analog zu der Beziehung (IV) ergibt sich die Gierrate $\dot{\Psi}_1$ aus dem Ausdruck (II) zu

$$\dot{\Psi}_1 = \frac{(\delta + \dot{\delta} \cdot \dot{LcPaytime}) \cdot v}{l + v^2 \cdot EG} \qquad \text{(V)}$$

Die daraus bestimmte erwartete Gierrate kann mit einer anhand eines Referenzmodells des entsprechenden Fahrzeugs ermittelten Maximaldrehrate verglichen werden, die eine sichere Fahrsituation gewährleistet. Überschreitet der Wert der zu erwartenden Gierrate diese Maximaldrehrate, so kann das Fahrzeugrechnersystem frühzeitig einen korrigierenden Brems- und/oder Motoreingriff initiieren.

Der Bremseingriff und/oder Motoreingriff karin beendet werden, sobald die kritische Fahrsituation überwunden ist bzw. die Werte von $a_{y2}$ und $\Psi_1$ bzw. $\dot{\Psi}_1$ eine sichere Fahrsituation erwarten lassen.

Das kann z. B. am Unterschreiten der Signale $a_{y1}$ und $a_{y2}$ von bestimmten Grenzwerten (z. B. 5-10 m/s$^2$) erkannt werden.

Die vorliegende Erfindung schafft somit ein vorteilhaftes Verfahren und ein System, mit dem sicherheitsgefährdende Fahrsituationen frühzeitig erkannt und ihr Auftreten somit vermieden werden kann.

Somit geht die Erfindung über die Bereitstellung eines reaktiven Systems, das bei einer bestehenden Fahrzeuginstabilität (z.B. Abweichung der gemessenen Gierrate $\dot{\Psi}$ von der Sollgierrate, Überschreiten der Querbeschleunigungsschwelle) eingreift, hinaus. Sie beinhaltet vielmehr ein System, das bei einer zukünftig zu erwartenden Instabilität vorausschauend aktiviert wird.

Die Fahreraktion spielt dabei die bestimmende Rolle, und es ergibt sich ein enormer zeitlicher Vorteil, da nicht erst auf Fahrzeugreaktionen gewartet werden muss.

**Bezugszeichenliste:**

1 Radrehzahlsensor
2 Tandemhauptzylinder (THZ)- Drucksensor
3 Querbeschleunigungssensor
4 Gierratensensor
5 Lenkradwinkelsensor
6 Radbremse
7 Hydraulikeinheit
8 Fahrzeugrechnersystem

ECU Fahrzeugrechnersystem
HCU Hydraulikeinheit
THZ Tandemhauptzylinder
$a_y$ Querbeschleunigung
$a_{y1}$ momentane Querbeschleunigung
$a_{y2}$ zu erwartende Querbeschleunigung
$\delta$ Lenkwinkel
$\dot{\delta}$ Lenkwinkelgradient
EG Eigenlenkgradient
$\gamma$ Lenkradwinkel
$\dot{\gamma}$ Lenkradwinkelgradient
$\gamma^*$ Lenkradwinkel bei 0,3 g
1 Radstand
$\dot{\Psi}$ Gierrate
$\dot{\Psi}_1$ zu erwartende Gierrate

t        Zeit

τ        Zeit bei der das Fahrzeug seinen maximalen Wankwinkel erreicht hat

v        Fahrzeuggeschwindigkeit

**Patentansprüche**

1. Verfahren zur Regelung der Fahrstabilität eines Fahrzeugs, bei dem eine Fahrsituation des Fahrzeugs charakterisierende Größen ($a_y$, v, δ, γ, Ψ, $\dot{δ}$, $\dot{γ}$, $\dot{Ψ}$) von einem Prozess erfasst werden, mit den Schritten

   a. Ermitteln einer Fahreraktion aus den von dem Prozess erfassten Größen ($a_y$, v, δ, γ, Ψ, $\dot{δ}$, $\dot{γ}$,),

   b. Ermitteln eines momentan zu erwartenden Fahrverhaltens des Fahrzeugs ($a_{y1}$) aufgrund der ermittelten Fahreraktionen,

   c. Untersuchung des zu erwartenden Fahrverhaltens daraufhin, ob eine kritische Fahrsituation zu erwarten ist und

   d. Vornehmen von Brems- und/oder Motoreingriffen bereits bei einem stabilen Fahrverhalten, falls eine kritische Fahrsituation zu erwarten ist,

   **dadurch gekennzeichnet, dass** auf der Basis der Fahreraktion eine das Fahrverhalten des Fahrzeugs charakterisierende zukünftig zu erwartende Querbeschleunigung ($a_{y2}$), welche die theoretische Querbeschleunigung enthält , die das Fahrzeug zukünftig hat, wenn der Fahrer mit gleichmäßiger Lenkwinkelgeschwindigkeit ($\dot{δ}$) weiter ein- oder auslenkt, berechnet und mit einem Grenzwert verglichen wird und in Abhängigkeit von dem Vergleichsergebnis die Brems- und/oder Motoreingriffe vorgenommen werden.

2. Verfahren nach Anspruch 1,
   **dadurch gekennzeichnet,**
   **dass** als Prozess ein elektronisches Fahrstabilitätsprogramm für Fahrzeuge durchgeführt wird.

3. Verfahren nach einem oder beiden der Ansprüche 1 und 2,
   **dadurch gekennzeichnet,**
   **dass** mindestens die Fahrzeuggeschwindigkeit (v) und der Lenkradwinkel (γ) und/oder der Lenkwinkel (δ) erfasst werden.

4. Verfahren nach einem oder mehreren der vorangegangenen Ansprüche,
   **dadurch gekennzeichnet,**
   **dass** die zu erwartende Querbeschleunigung ($a_{y1}$), die das Fahrzeug erreicht, wenn der Fahrer mit dem aktuell eingestellten Lenkwinkel (δ) weiterfährt, ermittelt wird.

5. Verfahren nach einem oder mehreren der vorangegangenen Ansprüche,
   **dadurch gekennzeichnet,**
   **dass** die Fahreraktion mittels einer aus den Größen Lenkwinkel (δ) und Fahrzeuggeschwindigkeit (v) unter Einbeziehung von Fahrzeugkonstanten (1, EG) erzeugten, momentanen Querbeschleunigung $a_{y1}$ ermittelt wird.

6. Verfahren nach einem oder mehreren der vorangegangenen Ansprüche,
   **dadurch gekennzeichnet,**
   **dass** die zu erwartende Querbeschleunigung ($a_{y2}$) ermittelt wird, die das Fahrzeug erreicht, wenn der Fahrer mit nahezu gleicher Lenkgeschwindigkeit ($\dot{δ}$) weiter ein-oder auslenkt.

7. Verfahren nach einem oder mehreren der vorangegangenen Ansprüche,
   **dadurch gekennzeichnet,**
   **dass** die Fahreraktion mittels einer aus den Größen Lenkwinkelgeschwindigkeit ($\dot{δ}$) und Fahrzeuggeschwindigkeit (v) unter Einbeziehung von Fahrzeugkonstanten (1, EG) erzeugten, zu erwartenden Querbeschleunigung $a_{y2}$ ermittelt wird.

8. Verfahren nach einem oder mehreren der vorangegangenen Ansprüche,
   **dadurch gekennzeichnet,**
   **dass** die ermittelten Größen der Querbeschleunigungen ($a_{y1}$, $a_{y2}$) mit jeweils einem oder mindestens einem Grenzwert verglichen werden.

**9.** Verfahren nach einem oder mehreren der vorangegangenen Ansprüche,
**dadurch gekennzeichnet,**
**dass** die Bremseingriffe an mindestens einem Rad erfolgen.

**10.** Verfahren nach einem oder mehreren der vorangegangenen Ansprüche,
**dadurch gekennzeichnet,**
**dass** durch die Bremseingriffe die Fahrzeuggeschwindigkeit (v) verringert wird.

**11.** Verfahren nach einem oder mehreren der vorangegangenen Ansprüche,
**dadurch gekennzeichnet,**
**dass** in Abhängigkeit von Ist- und Solldrehdaten durch die Bremseingriffe ein Zusatzdrehmoment um die Hochachse des Fahrzeugs erzwungen wird.

**12.** Verfahren nach Anspruch 11,
**dadurch gekennzeichnet,**
**dass** die Istdrehdaten mit Hilfe eines Gierratensensors (4) ermittelt und die Solldrehdaten aus Prozessgrößen in einem Fahrzeugmodell ermittelt werden.

**13.** Verfahren nach einem oder mehreren der vorangegangenen Ansprüche,
**dadurch gekennzeichnet,**
**dass** Signale für eine ein ermitteltes Zusatzdrehmoment und/oder eine ermittelte Geschwindigkeitsreduktion des Fahrzeugs bewirkende Druckanforderung für einen Bremsdruckaufbau und/oder einen Bremsdruckabbau in den Radbremsen in einer Fahrdynamikregelung generiert, entsprechende Befehle an Aktuatoren ausgegeben werden.

**14.** Verfahren nach einem oder mehreren der vorangegangenen Ansprüche,
**dadurch gekennzeichnet,**
**dass** eine aufgrund der Fahreraktion zu erwartende Gierrate ($\dot{\Psi}_1$) ermittelt wird.

**15.** Verfahren nach Anspruch 14,
**dadurch gekennzeichnet,**
**dass** die zu erwartende Gierrate ($\dot{\Psi}_1$)mit einem Grenzwert verglichen wird, um eine kritische Fahrsituation zu erkennen.

**16.** Verfahren nach einem oder mehreren der vorangegangenen Ansprüche,
**dadurch gekennzeichnet,**
**dass** die Signale für den Bremsdruckaufbau und/oder den Bremsdruckabbau in Abhängigkeit von den Größen der Querbeschleunigungen ($a_{y1}$, $a_{y2}$) und/oder der Fahrzeuggeschwindigkeit (v) und/oder der tatsächlichen Querbeschleunigung ($a_{y1}$) und/oder dem Lenkradwinkel ($\gamma$) gebildet werden.

**17.** Verfahren nach einem oder mehreren der vorangegangenen Ansprüche,
**dadurch gekennzeichnet,**
**dass** der Brems- und/oder Motoreingriff beendet wird, wenn die erwartete kritische Fahrsituation oder eine tatsächliche kritische Fahrsituation nicht mehr ermittelt werden.

**18.** Verfahren nach einem oder mehreren der vorangegangenen Ansprüche,
**dadurch gekennzeichnet,**
**dass** die kritische Fahrsituation nicht mehr ermittelt wird, wenn die Größen der Querbeschleunigungen ($a_{y1}$, $a_{y2}$) unterhalb vorgegebener Schwellenwerte liegen.

**19.** System zur Regelung der Fahrstabilität eines Fahrzeugs, mit das Fahrverhalten des Fahrzeugs charakterisierende und in einen Prozess eingehende Größen messende Sensoren (1-5), einer Einheit (8) zum Auswerten der gemessenen Werte der Größen ($a_y$, v, $\delta$, $\gamma$, $\Psi$, $\dot{\delta}$, $\dot{\gamma}$, $\dot{\Psi}$) und einem Mittel zum Erzeugen von Steuersignalen zum Steuern eines Brems- und/oder Motoreingriffs, mit

    a. einem Mittel zum Ermitteln einer Fahreraktion aus den Werten der gemessenen Größen ($a_y$, v, $\delta$, $\gamma$, $\Psi$, $\dot{\delta}$, $\dot{\gamma}$, $\dot{\Psi}$),
    b. einem Mittel zum Bestimmen von aufgrund der ermittelten Fahreraktion zukünftig zu erwartenden Werten von eine Fahrdynamik des Fahrzeugs charakterisierenden, aus den gemessenen Größen ($a_y$, v, $\delta$, $\gamma$, $\Psi$, $\dot{\delta}$, $\dot{\gamma}$,

$\dot{\Psi}$) und Fahrzeugkonstanten (1, EG) ableitbaren Größen ($a_{y2}$, $\dot{\Psi}_1$),

c. ein Vergleichsmittel zum Vergleichen der zu erwartenden Werte dieser Größen ($a_{y2}$, $\dot{\Psi}_1$) mit Schwellenwerten für diese Größen ($a_{y2}$, $\dot{\Psi}_1$) und

d. einem Mittel zur Steuerung von Brems- und/oder Motoreingriffen in Abhängigkeit des Ergebnisses des Vergleichs,

**gekennzeichnet durch** Mittel, die derart ausgebildet sind, dass auf der Basis der Fahreraktion eine das Fahrverhalten des Fahrzeugs charakterisierende zukünftig zu erwartende Querbeschleunigung ($a_{y2}$), welche die theoretische Querbeschleunigung enthält, die das Fahrzeug zukünftig hat, wenn der Fahrer mit gleichmäßiger Lenkwinkelgeschwindigkeit ($\dot{\delta}$) weiter ein- oder auslenkt, berechnet und mit einem Grenzwert verglichen wird und in Abhängigkeit von dem Vergleichsergebnis die Brems- und/oder Motoreingriffe vorgenommen werden.

**20.** System nach Anspruch 19,
**dadurch gekennzeichnet,**
**dass** der Prozess ein elektronisches Fahrstabilitätsprogramm für Fahrzeuge ist.

**21.** System nach einem oder beiden der Ansprüche 19 und 20,
**dadurch gekennzeichnet,**
**dass** mindestens ein Raddrehzahlsensor (1) und ein Lenkradwinkelsensor (5) und/oder ein Lenkwinkelsensor beinhaltet sind.

**22.** System nach einem oder mehreren der Ansprüche 19 bis 21,
**dadurch gekennzeichnet,**
**dass** ein Querbeschleunigungssensor (3) beinhaltet ist.

**23.** System nach einem oder mehreren der Ansprüche 19 bis 22,
**dadurch gekennzeichnet,**
**dass** ein Gierratensensor (4) beinhaltet ist.

**24.** System nach einem oder mehreren der Ansprüche 19 bis 23,
**dadurch gekennzeichnet,**
**dass** es Bestandteil einer Fahrstabilitätsregelung, wie ABS, TCS, ESP und dergleichen ist.

**25.** Verwendung eines Systems nach einem oder mehreren der Ansprüche 19 bis 24 in einer Einrichtung zum Verhindern des Kippens eines Fahrzeugs.

**Claims**

**1.** Method for controlling the driving stability of a vehicle, in which variables ($a_y$, v, $\delta$, $\gamma$, $\psi$, $\delta$, $\dot{\gamma}$, $\dot{\psi}$) which characterize a driving situation of the vehicle are acquired by a process, having the steps:

a. determination of a driver action on the basis of the variables ($a_y$, v, $\delta$, $\gamma$, $\psi$, $\delta$, $\dot{\gamma}$) which are acquired by the process,

b. determination of an instantaneously expected driving behaviour of the vehicle ($a_{y1}$) on the basis of the determined driver actions,

c. investigation of the expected driving behaviour to determine whether a critical driving situation is to be expected, and

d. performance of braking interventions and/or engine interventions as early as during a stable driving behaviour if a critical driving situation is to be expected,

**characterized in that** a lateral acceleration ($a_{y2}$) which is to be expected in future, which characterizes the driving behaviour of the vehicle and which contains the theoretical lateral acceleration which the vehicle will have in future if the driver continues to turn in and turn out with a uniform steering angle speed ($\dot{\delta}$), is calculated on the basis of the driver action and is compared with a limiting value, and the braking interventions and/or engine interventions are performed as a function of the comparison result.

**2.** Method according to Claim 1,
**characterized**

**in that** an electronic driving stability programme for vehicles is executed as the process.

3.  Method according to one or both of Claims 1 and 2,
    **characterized**
    **in that** at least the vehicle speed (v) and the steering wheel angle ($\gamma$) and/or the steering angle ($\delta$) are acquired.

4.  Method according to one or more of the preceding claims,
    **characterized**
    **in that** the expected lateral acceleration ($a_{y1}$) which the vehicle reaches when the driver continues to drive with the currently set steering angle ($\delta$) is determined.

5.  Method according to one or more of the preceding claims,
    **characterized**
    **in that** the driver action is determined by means of an instantaneous lateral acceleration ($a_{y1}$) which is generated from the variables of the steering angle ($\delta$) and the vehicle speed (v) including vehicle constants (1, EG).

6.  Method according to one or more of the preceding claims,
    **characterized**
    **in that** the expected lateral acceleration ($a_{y2}$) which the vehicle reaches when the driver continues to turn in or turn out with virtually the same steering speed ($\dot{\delta}$) is determined.

7.  Method according to one or more of the preceding claims,
    **characterized**
    **in that** the driver action is determined by means of an expected lateral acceleration ($a_{y2}$) which is generated from the variables of the steering angle speed ($\dot{\delta}$) and a vehicle speed (v) including vehicle constants (1, EG).

8.  Method according to one or more of the preceding claims,
    **characterized**
    **in that** the variables which are determined for the lateral accelerations ($a_{y1}$, $a_{y2}$) are compared with, in each case, one or at least one limiting value.

9.  Method according to one or more of the preceding claims,
    **characterized**
    **in that** the braking interventions take place at at least one wheel.

10. Method according to one or more of the preceding claims,
    **characterized**
    **in that** the vehicle speed (v) is reduced by means of the braking interventions.

11. Method according to one or more of the preceding claims,
    **characterized**
    **in that** an additional torque about the vertical axis of the vehicle is forcibly brought about as a function of actual rotation data and set point rotation data by means of the braking interventions.

12. Method according to Claim 11,
    **characterized**
    **in that** the actual rotation data are determined using a yaw rate sensor (4), and the set point rotation data are determined from process variables in a vehicle model.

13. Method according to one or more of the preceding claims,
    **characterized**
    **in that** signals for a pressure request which brings about a determined additional torque and/or a determined reduction in speed of the vehicle are generated in order to build up brake pressure and/or reduce brake pressure in the wheel brakes in a vehicle dynamics control means and corresponding instructions are output to actuators.

14. Method according to one or more of the preceding claims,
    **characterized**
    **in that** a yaw rate ($\dot{\psi}_1$) which is to be expected on the basis of the driver action is determined.

**15.** Method according to Claim 14,
**characterized**
**in that** the expected yaw rate ($\dot{\psi}_1$) is compared with a limiting value in order to detect a critical driving situation.

**16.** Method according to one or more of the preceding claims,
**characterized**
**in that** the signals for the build up of brake pressure and/or the reduction of brake pressure are formed as a function of the variables of the lateral accelerations ($a_{y1}$, $a_{y2}$) and/or the vehicle speed (v) and/or the actual lateral acceleration ($a_{y1}$) and/or the steering wheel angle ($\gamma$).

**17.** Method according to one or more of the preceding claims,
**characterized**
**in that** the braking intervention and/or engine intervention are/is terminated if the expected critical driving situation or an actual critical driving situation is no longer determined.

**18.** Method according to one or more of the preceding claims,
**characterized**
**in that** the critical driving situation is no longer determined if the variables of the lateral accelerations ($a_{y1}$, $a_{y2}$) are below predefined threshold values.

**19.** System for controlling the driving stability of a vehicle, with sensors (1-5) which measure variables which characterize the driving behaviour of the vehicle and are included in a process, a unit (8) for evaluating the measured values of the variables ($a_y$, v, $\delta$, $\gamma$, $\psi$, $\dot{\delta}$, $\dot{\gamma}$, $\dot{\psi}$), and a means for generating control signals for controlling a braking intervention and/or engine intervention, having

    a. a means for determining a driver action from the values of the measured variables ($a_y$, v, $\delta$, $\gamma$, $\psi$, $\dot{\delta}$, $\dot{\gamma}$, $\dot{\psi}$),
    b. a means for determining values, which can be expected in future on the basis of the determined driver action, of variables ($a_{y2}$, $\dot{\psi}_1$) which characterize driving dynamics of the vehicle and can be derived from the measured variables ($a_y$, v, $\delta$, $\gamma$, $\psi$, $\dot{\delta}$, $\dot{\gamma}$) $\dot{\psi}$) and vehicle constants (1, EG),
    c. a comparison means for comparing the expected values of these variables ($a_{y2}$, $\dot{\psi}_1$) with threshold values for these variables ($a_{y2}$, $\dot{\psi}_1$), and
    d. a means for controlling braking interventions and/or engine interventions as a function of the result of the comparison,

    **characterized by** means which are embodied in such a way that a lateral acceleration ($a_{y2}$) which is to be expected in future, which characterizes the driving behaviour of the vehicle and which contains the theoretical lateral acceleration which the vehicle will have in future if the driver continues to turn in or turn out with a uniform steering angle speed ($\dot{\delta}$), is calculated on the basis of the driver action and is compared with a limiting value, and the braking interventions and/or engine interventions are performed as a function of the comparison result.

**20.** System according to Claim 19,
**characterized**
**in that** the process is an electronic driving stability programme for vehicles.

**21.** System according to one or both of Claims 19 and 20,
**characterized**
**in that** at least one wheel speed sensor (1) and one steering wheel angle sensor (5) and/or one steering angle sensor are included.

**22.** System according to one or more of Claims 19 to 21,
**characterized**
**in that** a lateral acceleration sensor (3) is included.

**23.** System according to one or more of Claims 19 to 22,
**characterized**
**in that** a yaw rate sensor (4) is included.

**24.** System according to one or more of Claims 19 to 23,

**characterized**

**in that** said system is a component of a driving stability control means such as ABS, TCS, ESP and the like.

25. Use of a system according to one or more of Claims 19 to 24 in a device for preventing a vehicle from tilting.


**Revendications**

1. Procédé de régulation de la stabilité de roulage d'un véhicule, dans lequel des grandeurs ($a_\gamma$, v, $\delta$, $\gamma$, $\Psi$, $\delta'$, $\gamma'$, $\Psi'$) qui caractérisent une situation de roulage du véhicule sont détectées par un procédé qui présente les étapes qui consistent à :

   a. déterminer une action du conducteur à partir des grandeurs ($a_\gamma$, v, $\delta$, $\gamma$, $\Psi$, $\delta'$, $\gamma'$) saisies par le procédé,
   b. déterminer un comportement prévisible de roulage du véhicule ($\alpha_{\gamma1}$) à cet instant sur base des réactions du conducteur qui ont été déterminées,
   c. étudier le comportement prévisible de roulage pour vérifier si une situation critique de roulage est prévisible et
   d. au cas où une situation critique de roulage est prévisible, intervenir sur les freins et/ou le moteur pendant que le comportement de roulage est encore stable,

   **caractérisé en ce que**
   sur base de l'action du conducteur, une accélération transversale ($a_{\gamma2}$) future prévisible qui caractérise le comportement de roulage du véhicule et qui contient l'accélération transversale que le véhicule aurait théoriquement dans le futur si le conducteur redressait ou braquait encore à une vitesse uniforme d'angle de braquage ($\delta'$) est calculée et comparée à une valeur limite, les interventions sur les freins et/ou le moteur étant réalisées en fonction du résultat de la comparaison.

2. Procédé selon la revendication 1, **caractérisé en ce que** comme procédé, un programme électronique de stabilité de roulage de véhicules est exécuté.

3. Procédé selon l'une des revendications 1 et 2 ou les deux, **caractérisé en ce qu'**au moins la vitesse (v) du véhicule et l'angle ($\gamma$) des roues directrices et/ou l'angle de braquage ($\delta$) sont détectés.

4. Procédé selon l'une ou plusieurs des revendications précédentes, **caractérisé en ce que** l'accélération transversale ($a_{\gamma1}$) prévisible qu'atteindrait le véhicule si le conducteur poursuivait sa conduite à l'angle de braquage ($\delta$) établi à ce moment est déterminée.

5. Procédé selon l'une ou plusieurs des revendications précédentes, **caractérisé en ce que** l'action du conducteur est déterminée à tout instant au moyen d'une accélération transversale $a_{\gamma1}$ formée à partir des grandeurs angle de braquage ($\delta$) et vitesse (v) du véhicule en faisant intervenir des constantes (1, EG) du véhicule.

6. Procédé selon l'une ou plusieurs des revendications précédentes, **caractérisé en ce que** l'accélération transversale ($a_{\gamma2}$) prévisible que le véhicule atteindrait si le conducteur continuait de redresser ou de braquer à une vitesse de braquage ($\delta'$) presque constante est déterminée.

7. Procédé selon l'une ou plusieurs des revendications précédentes, **caractérisé en ce que** l'action du conducteur est déterminée au moyen d'une accélération transversale $a_{\gamma2}$ prévisible formée à partir des grandeurs de vitesse ($\delta'$) d'angle de braquage et de vitesse (v) du véhicule en faisant intervenir des constantes (1, EG) du véhicule.

8. Procédé selon l'une ou plusieurs des revendications précédentes, **caractérisé en ce que** les grandeurs déterminées des accélérations transversales ($a_{\gamma1}$, $a_{\gamma2}$) sont comparées chacune à une ou à au moins une valeur limite.

9. Procédé selon l'une ou plusieurs des revendications précédentes, **caractérisé en ce que** les interventions sur les freins s'effectuent sur au moins une roue.

10. Procédé selon l'une ou plusieurs des revendications précédentes, **caractérisé en ce que** la vitesse (v) du véhicule est diminuée par les interventions sur les freins.

11. Procédé selon l'une ou plusieurs des revendications précédentes, **caractérisé en ce que** les interventions de freinage imposent un couple de rotation supplémentaire autour de l'essieu principal du véhicule en fonction de données de rotation effective et de rotation de consigne.

12. Procédé selon la revendication 11, **caractérisé en ce que** les données de rotation effective sont déterminées à l'aide d'un détecteur (4) de vitesse de lacet et **en ce que** les données de rotation de consigne sont déterminées dans un modèle du véhicule à partir des grandeurs de procédé.

13. Procédé selon l'une ou plusieurs des revendications précédentes, **caractérisé en ce que** des signaux d'une demande de pression qui a pour effet une réduction du couple supplémentaire de rotation qui a été déterminé et/ou dune réduction de la vitesse du véhicule qui a été déterminée sont produits dans une régulation de la dynamique de roulage en vue de l'établissement d'une pression de freinage et/ou d'une diminution de pression de freinage dans les freins de roues, des commandes appropriées étant délivrées à des actionneurs.

14. Procédé selon l'une ou plusieurs des revendications précédentes, **caractérisé en ce qu'**une vitesse de lacet ($\Psi'_1$) prévisible sur base de l'action du conducteur est déterminée.

15. Procédé selon la revendication 14, **caractérisé en ce que** la vitesse prévisible de lacet ($\Psi'_1$) est comparée à une valeur limite pour détecter une situation de roulage.

16. Procédé selon l'une ou plusieurs des revendications précédentes, **caractérisé en ce que** les signaux d'établissement d'une pression de freinage et/ou d'une diminution de la pression du freinage sont formés en fonction des grandeurs d'accélération transversale ($a_{\gamma 1}$, $a_{\gamma 2}$) et/ou de la vitesse (v) du véhicule et/ou de l'accélération transversale effective ($a_{\gamma 1}$) et/ou de l'angle ($\gamma$) des roues directrices.

17. Procédé selon l'une ou plusieurs des revendications précédentes, **caractérisé en ce que** l'intervention sur les freins et/ou le moteur est arrêtée lorsqu'il est déterminé que la situation de roulage prévisible ou la situation effective de roulage ne sont plus critiques.

18. Procédé selon l'une ou plusieurs des revendications précédentes, **caractérisé en ce qu'**il est déterminé que la situation de roulage n'est plus critique si les grandeurs des accélérations transversales ($a_{\gamma 1}$, $a_{\gamma 2}$) sont situées en dessous de valeurs de seuil prédéterminées.

19. Système de régulation de la stabilité du roulage d'un véhicule, qui présente des détecteurs (1-5) qui mesurent des grandeurs qui caractérisent le comportement de roulage du véhicule et qui interviennent dans un procédé, une unité (8) d'évaluation des valeurs mesurées des grandeurs ($a_\gamma$, v, $\delta$, $\gamma$, $\Psi$, $\delta'$, $\gamma'$, $\Psi'$) et un moyen de formation de signaux de commande qui commande une intervention sur les freins et/ou sur le moteur, et présentant

   a. un moyen de détermination d'une action du conducteur à partir des valeurs des grandeurs mesurées ($a_\gamma$, v, $\delta$, $\gamma$, $\Psi$, $\delta'$, $\gamma'$, $\Psi'$),

   b. un moyen de détermination de valeurs futures prévisibles sur base de l'action du conducteur qui a été déterminée, de valeurs de grandeurs ($a_{\gamma 2}$, $\Psi'_1$) qui caractérisent la dynamique de roulage du véhicule et qui peuvent être déduites des grandeurs mesurées ($a_\gamma$, v, $\delta$, $\gamma$, $\Psi$, $\delta'$, $\gamma'$, $\Psi'$) et de constantes (1, EG) du véhicule,

   c. un moyen de comparaison qui compare les valeurs prévisibles de ces grandeurs ($a_{\gamma 2}$, $\Psi'_1$) à des valeurs de seuil de ces grandeurs ($a_{\gamma 2}$, $\Psi'_1$) et

   d. un moyen de commande d'intervention sur les freins et/ou sur le moteur en fonction du résultat de la comparaison,

   **caractérisé par**
   des moyens configurés de telle sorte que sur base de l'action du conducteur, une accélération transversale ($a_{\gamma 2}$) future prévisible qui caractérise le comportement de roulage du véhicule et qui contient l'accélération transversale que le véhicule aurait théoriquement dans le futur si le conducteur redressait ou braquait encore à une vitesse uniforme d'angle de braquage ($\delta'$) est calculée et comparée à une valeur limite, les interventions sur les freins et/ou le moteur étant réalisées en fonction du résultat de la comparaison.

20. Système selon la revendication 19, **caractérisé en ce que** le processus est un programme électronique de stabilité du roulage de véhicules.

21. Système selon l'une des revendications 19 et 20 ou les deux, **caractérisé en ce qu'**il présente au moins un détecteur (1) de vitesse de rotation des roues, un détecteur (5) d'angle des roues directrices et/ou un détecteur d'angle de braquage.

**22.** Système selon l'une ou plusieurs des revendications 19 à 21, **caractérisé en ce qu'**il contient un détecteur (3) d'accélération transversale.

**23.** Système selon l'une ou plusieurs des revendications 19 à 22, **caractérisé en ce qu'**il contient un détecteur (4) de vitesse de lacet.

**24.** Système selon l'une ou plusieurs des revendications 19 à 23, **caractérisé en ce qu'**il fait partie d'une régulation de la stabilité du roulage, par exemple ABS, TCS, ESP ou similaires.

**25.** Utilisation d'un système selon l'une ou plusieurs des revendications 19 à 24 dans un dispositif anti-tonneau pour véhicules.

Figuren:

$v = const = 80km/h$

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10119907 A1

- WO 0236401 A1